# EUROPEAN PATENT SPECIFICATION

(11) **EP 2 611 711 B1**
(45) Date of publication and mention of the grant of the patent: **26.10.2016**
(21) Application number: 11822218.1
(22) Date of filing: 29.08.2011
(51) Int. Cl.: B65D 81/24

(54) **ARRANGEMENT AND METHOD FOR PRESERVING A PRODUCT STORED IN A CONTAINER WITH AN OPENING**
ANORDNUNG UND VERFAHREN ZUR KONSERVIERUNG EINES IN EINEM BEHÄLTER MIT EINER ÖFFNUNG GELAGERTEN PRODUKTS
DISPOSITIF ET PROCÉDÉ POUR LA CONSERVATION D'UN PRODUIT STOCKÉ DANS UN CONTENANT COMPORTANT UNE OUVERTURE

(30) Priority: 30.08.2010 SE 1050880
(43) Date of publication of application: 10.07.2013
(73) Proprietor: Konsolvia AB, 421 65 Västra Frölunda (SE)
(72) Inventor: ARNEVALL, Magnus, 412 52 Göteborg (SE)
(74) Representative: Bergentall, Annika Maria
(86) International application number: PCT/SE2011/051033
(87) International publication number: WO 2012/030283

(56) References cited:
- EP-A1- 0 110 617
- FR-A1- 2 557 544
- FR-A1- 2 895 376
- GB-A- 2 187 704
- GB-A- 2 187 704
- US-A- 1 990 918
- US-A- 4 142 657
- US-A- 5 249 692
- US-A- 5 415 317
- US-A1- 2008 110 847

## Description

### TECHNICAL FIELD

The present invention relates to an arrangement for preserving or protecting a product, which is stored in a container provided with an opening, especially to extend the preservability of the product. The arrangement is intended for temporary protection of a product contained in the container against influence by substances which are harmful or negative to the product, for example gases, when a surface of the product may be exposed to such substances through the opening. Particularly, a harmful substance may be air, especially oxygen in the air, and the product may consist of a food product, more precisely a liquid food, such as a beverage, for example wine.

The invention also relates to a corresponding method for protecting and preserving a product stored in a container provided with an opening.

### TECHNICAL BACKGROUND

Many various arrangements are known, which are intended to protect a food product stored in a container against influence by air.

Most of these are based upon trying to create a vacuum in connection with the product, for example by pumping out air from a bottle. However, most such arrangements have turned out to function badly in practice or to be too complicated.

WO 2008/104 906 shows an arrangement for airtight preservation of a liquid in a container, for example a bottle. It consists of an inner container which is located in the bottle and which is filled with a replacing liquid in such a proportion in relation to the food product, that the pressure inside the container is to be constant. The inner container is connected with a sleeve which may be integral with the container itself, and which has a connection with the outer environment and the container. Separate tubes are arranged for the food liquid and the replacing liquid, respectively. This arrangement is complicated to manufacture as well as to use, since it consists of several various components. It cannot be removed when the contents of the bottle are served, which gives an unaesthetic impression. Neither it is easy to clean and re-use.

BE 1 015 334 shows a hollow tube with a compensating bag, which shall separate the liquid from the surrounding air completely. When liquid is poured out, the container is inclined 135 degrees, due to the external pressure air is introduced into the bag, which rises and is inflated. Liquid passes out through a tube and an open tap. Also when the liquid is served, the protecting device remains in place which is not pleasant. Tube and device are difficult to clean.

Also DE-A-30 30 859 shows a device, which is more or le stationary, i.e. it is not removed when the product is served. A bag is introduced through a special opening intended for this purpose, in the container and is a matically filled with air when liquid is let out through another opening, which is located in the lower part of the container. The container is a special container provided with two openings. The device is not suited for a conventional container, for example a bottle, for food products.

US 3 256 977 shows an arrangement consisting of a floating body, which is permanently arranged in a container and which is intentionally impossible to remove. By means of a projection it may be prevented that the opening of the container is obstructed by the floating body, so that liquid can be poured. Due to the fact that the arrangement cannot be removed, it cannot either be cleaned. Neither can it be used for different containers or be re-used in a desired conventional container, which might have a different shape or dimension. Nor it is aesthetically attractive with a disc floating around when the beverage is served.

Thus, the known arrangements exhibit several drawbacks, which result in the fact that their use is very limited in practice.

### DESCRIPTION OF THE INVENTION

Thus, it is an object of the present invention to provide an improved arrangement for preserving and protecting a product, which is stored in a container provided with an opening, through which the product can be delivered or poured or be possible to get hold of in another way, for example to be poured.

A special object of the invention is to extend the preservability of a product by protecting it against substances which might limit its preservability.

It is a further object of the invention to provide an arrangement which can be used to protect a product, particularly a food product, for example a beverage, such as wine, when it is contained in a container or a vessel with an opening, for example an opened bottle, a carafe, a bowl or similar, against surrounding air, or, more generally, against a substance which is harmful to the product, and which may be used for various types of containers, various shapes and sizes of the opening or for the surface, which runs the risk of being exposed to the harmful substance. Particularly, it is an object to provide such an arrangement, which generally is useful for various purposes and which can be re-used.

It is also an object to provide an arrangement, which can be cleaned easily, and which is simple and cheap to manufacture. Further, it is an object to provide an arrangement, which is easy to use. It is also an object to provide an arrangement, which is completely separate from the container, so that it can be removed before the product contained in the container is served. A further object is to provide an arrangement, which is hygienic and protects the product well, and which, so far as it is a food product that is to be preserved, complies with the demands made concerning allowable substances for contact with food products.

It is also an object of the invention to provide a method for preserving or protecting a product, which is stored in a container provided with an opening.

Thus, an arrangement described above is provided according to the invention, which exhibits the features indicated in the characterizing part of Claim 1.

A method is, thus, also provided, which exhibits the features indicated in the characterizing part of Claim 14.

Preferred embodiments are indicated by the features stated in the respective dependent claims.

It is an advantage of the invention that a consumer product is provided, which can be re-used, which is not connected to any special container, but can be used for different products, liquid as well as solid, which are stored in different types of containers, at least to the extent that the size of the surface requiring protection does not vary too much. It is also an advantage that an arrangement is provided, which is flexible and which adapts to the size of an exposed surface if the container has a cross section which varies, so that the exposed surface has a size, which varies depending on the consumed quantity, or filled quantity, of the product, and that it (the bag) is formable.

Another advantage is that an arrangement is obtained, which is easy to apply as well as easy to remove.

It is also an advantage that the preservability of a product in, for example, an opened container, as a bottle of wine, can be extended, and that the product in spite of that can be stored in its original bottle and also be served from its original bottle, which is of particular interest when so called finer wines are concerned. It is extremely advantageous that the preservability of a product, which is protected by an arrangement according to the invention, is considerably extended compared to if known vacuum devices are used, since there is nearly no exposure to, for example, air, i.e. extremely few oxygen molecules come into contact with the product compared to a quasi-vacuum, in which a reduced concentration of oxygen molecules can react freely with the surface of the product. At best vacuum pumps achieve a preservability of two to three weeks, while, by means of an arrangement according to the invention, where there is no contact surface worth mentioning between, for example, air and product, a preservability may be obtained, which is considerably longer.

### SHORT DESCRIPTION OF THE DRAWINGS

In the following the invention will be described more in detail in an exemplifying, but in no way limiting, purpose with reference to the accompanying drawings, in which
- Fig. 1: illustrates a first embodiment of an arrangement according to the invention,
- Fig. 1A: illustrates the arrangement according to Fig. 1 when it is brought into position to protect a product stored in a container,
- Fig. 2: illustrates a special embodiment of an arrangement according to the invention, in which the arrangement is provided with application means in the form of a fin or similar,
- Fig. 3: illustrates an alternative embodiment of an arrangement with application means in the form of an area designed in a special way,
- Fig. 4: illustrates a further embodiment of an arrangement according to the invention in a free, not applied position, in which the application means comprise a helical element associated with a closing device,
- Fig. 4A: illustrates the arrangement according to Fig. 4 when the protecting device is in contact with an exposed surface,
- Fig. 4B: illustrates the arrangement according to Fig. 4 applied in a container in the form of a wine bottle,

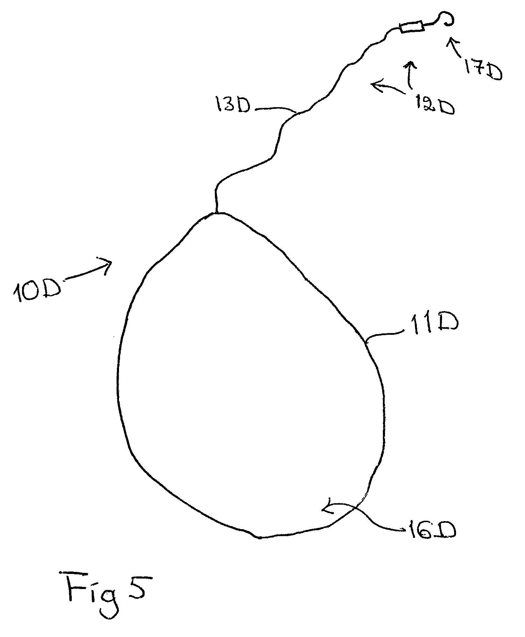

- Fig. 5: illustrates an alternative arrangement according to the invention, in which the application means comprise an attachment element, and
- Fig. 6: illustrates a further alternative arrangement, in which the application means comprise a closing device in the form of a cap.

### DETAILED DESCRIPTION OF THE INVENTION

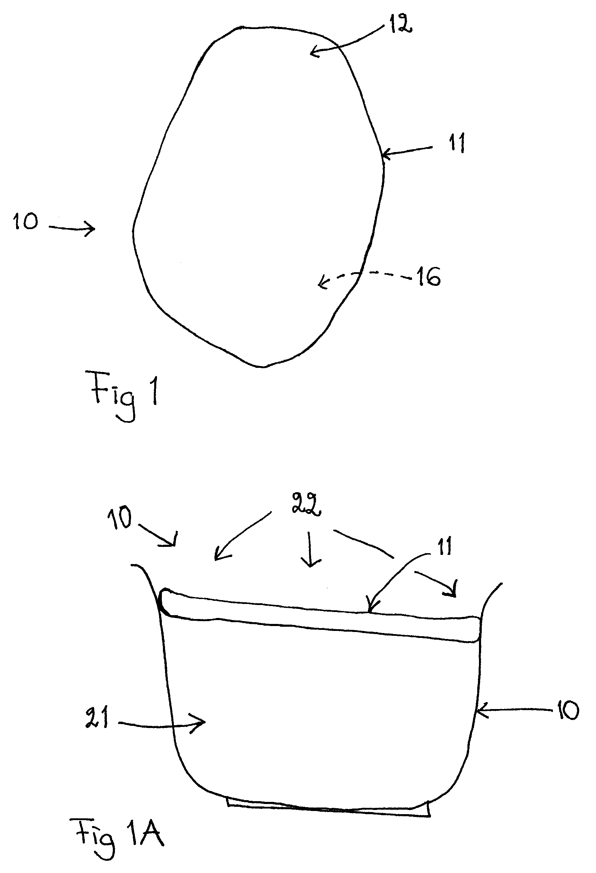

In Fig. 1 an arrangement 10 is schematically illustraded, which consists of a protecting device 11 in the form of a bag filled with a bag gas or a bag liquid 16, in its most general design. Here, the application means 12 is constituted by the bag surface itself, i.e. the bag can be taken hold of anywhere, for example, on a uniformly, symmetrically designed surface. The protective gas may, for example, consist of argon, which today is a generally established gas to be used in the food industry, and which is harmless.

However, several other alternatives are possible, but it must be a heavy gas or a light liquid which has a density which is lower than the density of the product to be protected, for example lower than the density of water. The density must also be higher than the density of the substance or substances harmful to the product, in many applications the oxygen of the surrounding air. An example of a bag liquid is an oil, which floats on the product to be protected, for example an oil which can float on water. To express it simpler, a liquid should have as low density as possible in order to have good floating properties, while a gas should have as high density as possible in order to be able to sink through air.

For protection of sweet products water and/or alcohol could be used in certain embodiments. For gas as well as for liquid many alternatives are possible, for example argon or any other inert gas below argon in the periodic system (group 18). The important thing is that the density is lower than the density of the product and higher than the density of the substance or substances against which the product is to be protected, and that it complies with necessary requirements for it use, for example in connection with food products or other edible products, beverages which are food products or other drinks.

The product to be protected is particularly a food product or a beverage, but the invention is not limited to such applications, but also other products can be protected by using the concept according to the invention, for example various types of chemicals, paints or similar. Particularly, but not exclusively, a consumer product for domestic use is intended with the arrangement.

It is, of course, also possible to protect solid or viscous products. Suitably, the bas is completely filled with bag gas or bag liquid.

The bag may have various sizes and/or shapes depending on the field of application, and the surface which may be exposed to a harmful substance through an opening in the container, for example the upwards facing opening in a bowl or a jar, a carafe or any other type of container.

If a liquid not being sufficiently light to exhibit good floating properties for the product in question is used as bag liquid, small air bubbles may be provided in the bag, or in some part of the bag, for example in a pocket or similar, which is intended to face downwards towards the product, in order to improve the floating ability.

The weight of the bag and the density demands stated above imply that the bag, when brought into contact with the exposed surface of a product, spreads and covers the entire surface.

If the container has different cross sections on different heights above the surface, on which it is placed, the size of the exposed surface will change if the quantity of the product is changed. Suitably, such a size of the bag is chosen, that the bag in a position, in which it is spread to a maximum, well covers the maximum size of the exposed surface.

The arrangement is very simple to use. If a product is stored in a container with an opening, and is to be stored therein for a longer or a shorter period of time, the bag is simply placed on the product and protects it as long as it is stored in the container.

If you wish to use some of the product, the bag is simply removed by taking hold of it anywhere. If some of the product remains in the container, the bag is simply placed on the new exposed surface. Possibly, an end of the bag may be drawn aside, so that the surface of the product is partly uncovered in order to remove a smaller quantity of the product.

It is easy to clean the bag in between uses, it may simply be rinsed. Thanks to the fact that it has a whole, closed, uniform surface, there are no nooks or spaces difficult to access for cleaning, neither spaces, in which residual products or any contamination may easily get stuck.

Fig. 1A illustrates an example of the arrangement 11 according to Fig. 1 placed on the exposed surface of a product 21 stored in a bowl 20 with an upwards facing opening 22. The bag 11 is spreading over the entire surface and protects the product, for example a soap, a cream or similar.

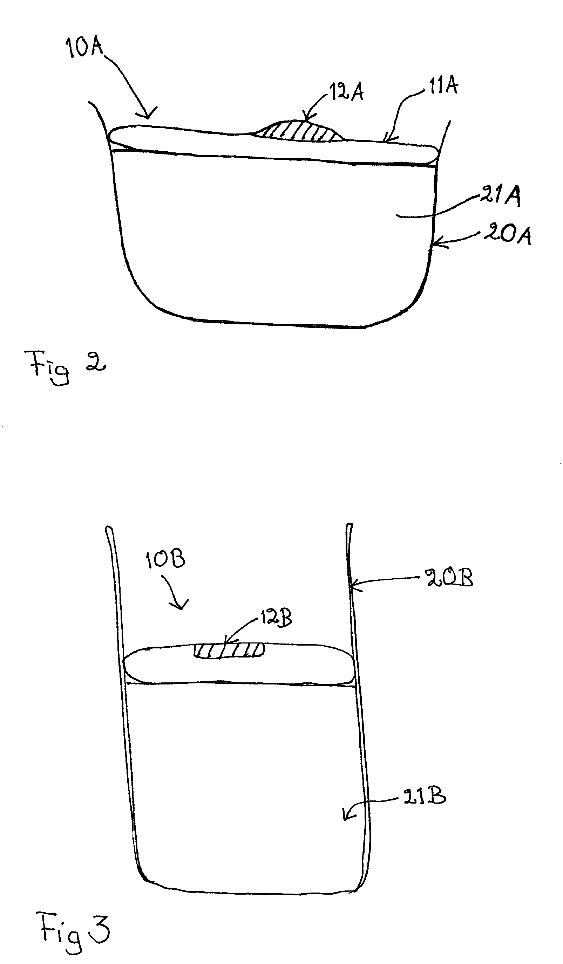

Fig. 2 illustrates an alternative embodiment of an arrangement 10A according to the invention. The difference in relation to the arrangement shown in Fig. 1 is that application means in the form of a fin 12A or any similar protruding organ, which is easy to grip, is arranged on the bag 11A, which is arranged to protect a product 21A preserved in a bowl 20A. The fin, or, more generally, the gripping organ, may be firmly connected to the bag 11A, or be integral with the bag 11A. Alternatively, it may be releasably arranged on the bag, in which case any type of fastening device on the bag for co-operation with the gripping organ or fastening device must be attached thereto. The fastening device may consist of suitable known fastening devices, for example catches, hooks, magnets or similar.

Fig. 3 illustrates an alternative arrangement 10B arranged to cover a product 21B stored in a container 20B. The arrangement is similar to the arrangement shown in Fig. 1 and Fig. 2, respectively, but the application means consist of a reinforced and/or marked area 12B of the bag 11B.

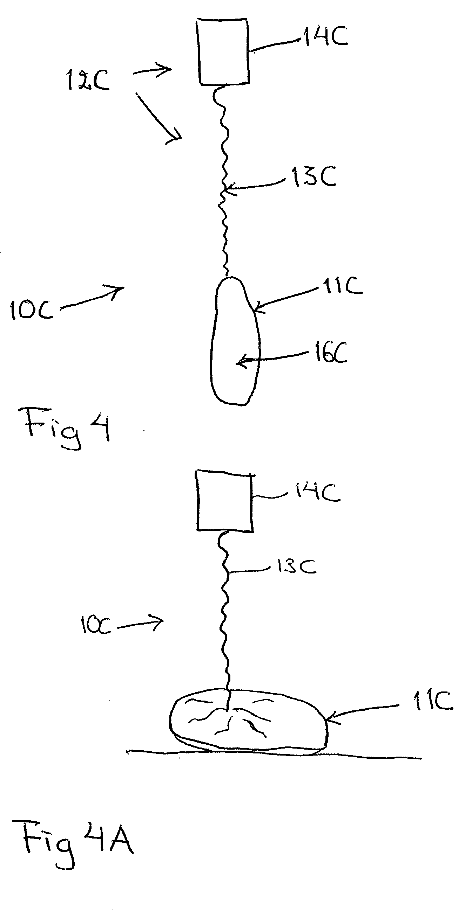

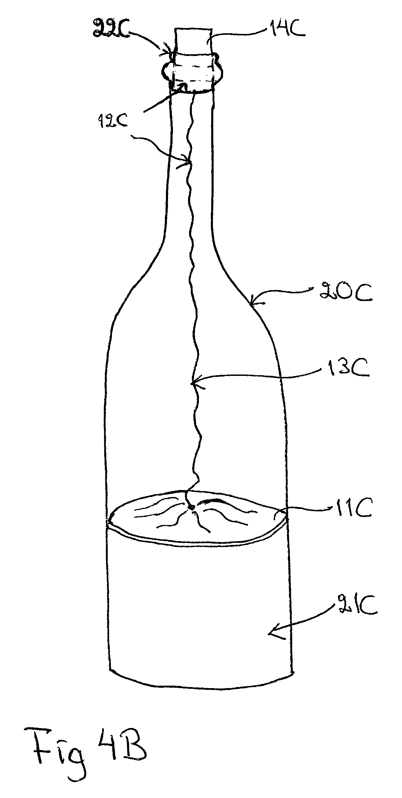

Fig. 4 illustrates a preferred embodiment of the invention, in which the arrangement 10C comprises a bag 11C filled with a bag gas or a bag liquid 16C, for example argon, an application means 13C in the form of a thread, a string, a band or similar, preferably a helical element that contracts when the arrangement is not used to protect a product, associated with the bag in one of its ends and with a sealing element 14C in its other end. In the illustrated example the arrangement is intended to be used for preserving wine in a wine bottle, i.e. to prolong the time, during which a wine or any other beverage can be stored in a bottle, the original seal of which has been broken, for example by uncorking, and the wine is exposed to the oxygen of the air.

The application means is advantageously elastic or stretchable by the influence of the weight of the bag, but this is not necessary. According to an advantageous embodiment it consists of a spiral, which, for example, can be made of plastic.

If an application means is elastic or stretchable, for example consisting of a thread, its resistance to stretching shall be so small that it is sufficient only with the weight of the bag to stretch out the application means as long that the entire application area can be reached, i.e. the surface to be protected, or to the bottom of the container (the bottle).

Preferably, the length exceeds the full height of, for example, a wine bottle in upright position. The bag changes its shape easily and shall have a volume that allows it to cover the entire surface of the wine which may be exposed to air, especially irrespective of the position or inclination of the bottle.

When the bag is inserted through the opening of the bottle and lowered against the surface of the wine, which also may occur automatically by the weight of the bag and stretching of the application means, the bag will change its shape and spread over the entire exposed surface until it reaches contact with the walls of the bottle. In certain embodiments the isolating surface of the bag follows the inner walls of the bottle upwards towards the opening of the bottle, where they are merged due to the tapering opening, in order to provide an extra safe protection, so that no or an extremely small quantity of air may permeate towards the exposed surface, especially if the bottle runs the risk of being rotated, shaken or similar during the storage time. This is especially due to the fact that as long as the container is standing in upright position, or the thread is sufficiently long to change pole, i.e. the bag is turned, if the bottle is turned upside down, only a temporary contact will occur with the air in the bottle. On the other hand, if the contents in a bottle/container runs the risk of splashing to and fro very much, so that repeated contact with air occurs, or, if contact with air must absolutely not occur, it may in certain embodiments be appropriate to use a bag, which is so shaped that it fills the entire container.

Fig. 4A illustrates the arrangement 10C according to Fig. 4 when it has reached contact with an exposed surface.

Fig. 4B illustrates the arrangement according to Fig. 4 when applied in a wine bottle 20C with an opening 22C, where a good half of the contents in the bottle has been consumed, and the bag 11C is spread to cover the exposed surface of the wine 21C. As an extra security the bottle is closed by a cork 14C after application of the bag. Since the cork 14C is associated with the helical element 13C, the arrangement can easily be removed before the wine is service, and thereafter easily be inserted again.

In a preferred embodiment the bag has a size sufficient also to cover the exposed surface when the wine bottle is lying, which may be advantageous in consideration of the storage.

In still another embodiment, as an alternative to a closing device, for example in the form of a cork, a ring may be used, which fits around the opening of the bottle. The ring may be provided with bars or rods, so that a fixed centre is obtained, in which the application means may be fixedly or releasably arranged.

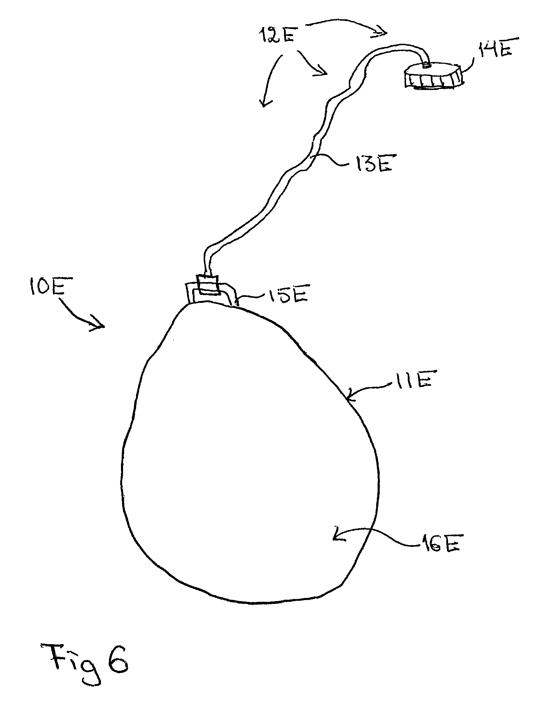

Fig. 6 illustrates an alternative embodiment of a protecting arrangement 10D comprising a bag 11D filled with bag gas or bag liquid 16D, as described above. An application means, for example a plastic spiral 12D, is attached in the bag 11D at one of its ends, and at its other end it is provided with an anchoring element 13D for temporary attachment in a cork or similar. This makes it possible to use the arrangement according to the invention in combination with any cork, or in order to replace a broken cork. (Of course, the arrangement according to the invention may be used also without anchoring element to replace a cork or a lid which has got broken, disappeared or similar.)

The anchoring element may consist of a hook, a catch or any other element suitable for the purpose.

Again, Fig. 6 illustrates an alternative embodiment, in which the arrangement 10E comprises a bag 11E filled with a bag gas or a bag liquid 16E. The application means 12E, a band, a string, a plastic spiral or similar, is in this case releasably associated with the bag by means of bag anchoring element 15E. In its other end the application means is fixedly or releasably associated with a lid 14E.

The lid may be of any conventional type, for example a screw lid. Of course, the application means may also in this embodiment be fixedly associated with the bag.

Characteristics shown or illustrated in any of the Figures or in the description may be combined freely to different embodiments, even if these are not explicitly shown.

Generally, the application means, especially when they comprise application means in the form of a spiral, an elastic element to be inserted into a bottle, do not need, or should not, be used when applying, inserting, the arrangement, but only when an arrangement is to be removed. Possibly, it might be necessary to adapt the bag to the shape and insert it manually, and, possibly, in a preferred embodiment, the fall against the exposed surface needs to be slowed down by the spiral or the elastic element.

Also in other aspects the invention is not limited to the explicitly illustrated embodiments, but can be varied freely within the scope of the appended claims. Especially, a number of alternative bag gases or bag liquids may be used.

Various materials may be used for the bag itself, for example multilayer plastic film, which is standard in the food industry. It can be one or several layers of PA (polyamide), which protects against oxygen, and PE (polyethene), which protects against liquid. How many layers and in which combination they are used depends on the field of application. PE has a smoother surface and may in certain embodiments be applied on the outside of the bag.

At the same time the different melting points of PA and PE must be considered when the joint of the bag is fused together. Possibly, also EVOH (ethylene vinyl alcohol) can be used, which forms a very strong barrier, but since it cannot come into contact with water, it must be enclosed in for example PE on both sides. Possibly, the bag might consist only of PE, of which material common plastic bags for food are made, although then perhaps of a somewhat thicker layer compared to plastic bags for food, which consist of a very thin layer. There are many other examples of plastics that can be used, here only a few are stated. The bag may have different sizes and other shapes than the illustrated shapes.

Neither, the invention is limited to the described fields of application, although it is advantageously to use it in the food industry. Other examples are the handling of chemicals, paints, when feeding domestic animals who often do not consume all of the portion served, or when serving food or drinks to children, old or ill persons, who perhaps cannot or do not want to eat or drink up everything at the same time, in order to avoid throwing away a fresh or prepared food product or drink immediately.

## Claims

1. Arrangement (10; 10A; 10B; 10C; 10D; 10E) for protecting or preserving a product (21; 21A; 21B; 21C), which is stored in a container device (20; 20A; 20B; 20C), such as a bottle, provided with walls and an opening (22; 22A; 22B; 22C), comprising a protecting device (11; 11A; 11B; 11C; 11D; 11E) for protection against influence by substances which are harmful to the product, such as gases, for example air, when a surface of the product is exposed to said harmful substance or substances through said opening, the protecting device being designed to be re-usable, and the arrangement furthermore comprising applications means (12; 12A; 12B; 12C; 12D; 12E) to bring the protection device (11; 11A; 11B; 11C; 11D; 11E) into contact with the exposed surface temporarily for preserving purposes,
c h a r a c t e r i z e d i n
that the protecting device (11; 11A; 11B; 11C; 11D; 11E) consists of a bag of a flexible material, which is filled with a bag gas or a bag liquid (16; 16A; 16B; 16C; 16D; 16E), said bag gas or bag liquid (16; 16A; 16B; 16C; 16D; 16E) having a density which is higher than the density of the harmful substance, for example the density of air, and which is lower than the density of the stored product, that the bag is closed and forms a whole, closed, uniform surface, that the bag, when brought into contact with the exposed surface of the product (21; 21A; 21B; 21C), is designed to change shape and spread and get such a shape and size of the contact surface that it directly covers substantially the entire exposed surface until it reaches contact with the walls of the container,
the contact surface of the bag having a variable shape and size depending on the shape and size of the exposed surface and being adaptable to the size and shape of the exposed surface, and in that the applications means (12; 12A; 12B; 12C; 12D; 12E) further being arranged to be used for removal of the whole or part of the bag from the product and the container in order to use at least a certain quantity of the product.

2. Device according to Claim 1,
**characterized in**
**that** the density of the bag gas or bag liquid (16; 16A; 16B; 16C; 16D; 16E) is higher than the density of air.

3. Device according to Claim 1 or 2,
**characterized in**
**that** it is designed to protect and to extend the preservability of a food product or a beverage, respectively, and that the flexible material, which forms the bag, as well as the bag gas or the bag liquid consist of substances which are harmless to the product.

4. Device according to Claim 3,
**c h a r a c t e r i z e d i n**
that it is designed to protect a liquid product, for example a beverage.

5. Device according to Claim 4,
**characterized in**
**that** it is designed to temporarily preserve or protect a product stored in a bottle, and that the protecting device is so designed that it at least can be removed from the bottle via the opening of the bottle by means of the application means (12C; 12D; 12E).

6. Device according to anyone of the Claims 1-4,
**characterized in**
**that** the application means (12) are constituted by the surface of the bag (11) or a portion thereof.

7. Device according to Claim 6,
**characterized in**
**that** the application means (12A; 12B) consist of a marked, or reinforced or thickened, area (12A) of the bag (11A; 11B), or bag gripping organs (12B) arranged on the bag.

8. Device according to anyone of the Claims 1-5,
**characterized in**
**that** the application means (12C; 12D; 12E) comprise an application element (13C; 13D; 13E) in the form of a thread or a band, for example of plastics or metal, preferably arranged as a spiral (13C), or which has an in another way adaptable length, and that it is fixedly or releasably associated with the bag (11C; 11D; 11E) or integral therewith.

9. Device according to Claim 8,
**characterized in**
**that** the application element is elastic, for example consisting of a rubber band.

10. Device according to Claim 8 or 9,
**characterized in**
**that** the application means furthermore comprise gripping organs, for example consisting of a weight or a handle, arranged in one end of said application element opposite to the end which is connected to or integral with the bag.

11. Device according to anyone of the Claims 8, 9 or 10,
**characterized in**
**that** the application means (13D) furthermore comprise or are associated with sealing devices (14C; 14D), for example a cork (14C) or a lid (14E), or similar, associated with the application elements and intended to close said opening.

12. Device according to Claim 10,
**characterized in**
**that** the application means at the end opposite to the end, at which the bag is located, are provided with fastening devices (17D), for example a hook, a screw, or similar, intended to be anchored in a closing device for the container before application.

13. Device according to anyone of the preceding Claims,
**characterized in**
**that** the bag gas consists of argon or any other food gas.

14. Method for protecting or preserving a product (21; 21A; 21B; 21C) with a given product density and which is stored in a container device (20; 20A; 20B; 20C), such as a bottle, provided with walls and an opening (22; 22A; 22B; 22C), when a surface of said product through the opening may be exposed to substances, which are harmful to or influence the product, for example, gas, air, by bringing, by means of applications means (12; 12A; 12B; 12C; 12D; 12E), a protection device (11; 11A; 11B; 11C; 11D; 11E) into contact with the exposed surface temporarily for preserving purposes using
**characterized in**
**that** it, when a surface of a product is exposed, comprises the steps of:
- bringing the protecting device (11; 11A; 11B; 11C; 11D; 11E) consisting of a closed bag made of a flexible material and having a whole, closed, uniform surface, and being filled with a bag gas or a bag liquid, into direct contact with the entire exposed surface to preserve or store the product temporarily, whereby the bag gas or the bag liquid has a density which is higher than the density of said substances, which are harmful to or influence the product, for example surrounding air or gases, and lower than the density of the stored product,
- the bag changes its shape when getting in contact with the exposed surface of the product and spreads to cover at least substantially the entire exposed surface until it reaches contact with the walls of the container, and whereby the shape and size of the contacting surface changes adaptably depending on the size and shape of the exposed surface,
- removing, using the applications means (12; 12A; 12B; 12C; 12D; 12E), the whole or part of the bag from the product and the container in order to use at least a certain quantity of the product.

15. Method according to Claim 14,
**characterized in**
**that** it comprises the step to:
- apply and remove the bag, respectively, by means of the application means associated or integral with the bag, or consisting of the bag itself or a portion thereof.

16. Method according to Claim 15,
**characterized in**
**that** it comprises the step to use the application means consisting of an application element, the active length of which may be changed, for example by the fact that it is elastic or helical, or similar, and that it consists of an element in the form of a thread or a band, for example of plastics, rubber or metal.

17. Method according to Claim 16,
**characterized in**
**that** it comprises the step to apply and remove the bag device, respectively, by means of gripping and/or closing devices, for example a cork or a lid, arranged in connection with the application elements.

18. Method according to anyone of the Claims 14-17,
**characterized in**
**that** it comprises the step to apply the bag device via an opening of a bottle in order to preserve a product in the form of a beverage, for example wine, and that the application elements have or may attain such a length, that, independently of on which level in the bottle the exposed surface of the product is situated, the bag when applied will bear against at least substantially the entire exposed surface.

## Patentansprüche

1. Anordnung (10; 10A; 10B; 10C; 10D; 10E) zum Schutz oder zur Konservierung eines Produkts (21; 21A; 21B; 21C) das in einer Behältervorrichtung (20; 20A; 20B; 20C), wie zum Beispiel eine Flasche, die mit Wänden und mit einer Öffnung (22; 22A; 22B; 22C) versehen ist, gelagert ist, mit einer Schutzvorrichtung (11; 11A; 11B; 11C; 11D; 11E) zum Schutz gegen Beeinträchtigung durch Substanzen die für das Produkt schädlich sind, sowie Gase wie zum Beispiel Luft, wenn eine Oberfläche des Produkts durch die Öffnung so einen schädlichen Substanz oder schädlichen Substanzen ausgesetzt wird, wobei die Schutzvorrichtung als wiederverwendbar ausgeführt ist, und wobei die Anordnung mit Anbringmitteln (12; 12A; 12B; 12C; 12D; 12E) ausgebildet ist um die Schutzvorrichtung (11; 11A; 11B; 11C; 11D; 11E) für konservierende Zwecke temporär in Kontakt mit der exponierten Oberfläche zu bringen,
**dadurch gekennzeichnet, dass**
die Schutzvorrichtung (11; 11A; 11B; 11C; 11D; 11E) aus einem Beutel aus einem flexiblen Material besteht dass mit einem Beutel-Gas oder mit einer Beutel-Flüssigkeit (16; 16A; 16B; 16C; 16D; 16E) gefüllt ist, wobei das Beutel-Gas oder die Beutel-Flüssigkeit (16; 16A; 16B; 16C; 16D; 16E) eine Dichte aufweist die höher ist als die Dichte der schädlichen Substanz, beispielsweise mit der Dichte von Luft, und geringer ist als die Dichte des gelagerten Produkts,
dass der Beutel geschlossen ist und eine vollständige, geschlossene, einheitliche Oberfläche bildet, wobei, wenn der Beutel Kontakt mit dem Produkt (21; 21A; 21B; 21C) bekommt, die Form des Beutels sich derart verändert und der Beutel sich so ausbreitet bis der Beutel Kontakt mit den Wänden des Behälters bekommt so dass die Kontaktoberfläche umgehend im Wesentlichen die ganze exponierte Oberfläche bedeckt,
wobei die Kontaktoberfläche des Beutels eine variable Form und eine variable Größe aufweist die sich in Abhängigkeit von der Form und von der Größe der exponierten Oberfläche anpasst, und dadurch dass die Anbringmittel (12; 12A; 2B; 12C; 12D; 12E) ferner für ein teilweises oder vollständiges Entfernen des Beutels vom Produkt und vom Behälter ausgebildet sind für den Verbrauch von zumindest eine gewisse Menge des Produkts.

2. Anordnung nach Anspruch 1,
**dadurch gekennzeichnet, dass**
die Dichte des Beutel-Gases oder der Beutel-Flüssigkeit (16; 16A; 16B; 16C; 16D; 16E) höher ist als die Dichte von Luft.

3. Anordnung nach Anspruch 1 oder 2,
**dadurch gekennzeichnet, dass** sie zum Schutz und zur Verlängerung der Haltbarkeit eines Lebensmittelprodukts beziehungsweise eines Getränkes ausgebildet ist, und dass das flexible Material aus dem der Beutel besteht, sowie das Beutel-Gas oder die Beutel-Flüssigkeit aus Substanzen bestehen die für das Produkt unschädlich sind.

4. Anordnung nach Anspruch 3,
**dadurch gekennzeichnet, dass** sie zum Schutz von einem flüssigen Produkt, zum Beispiel eines Getränkes, ausgebildet ist.

5. Anordnung nach Anspruch 4,
**dadurch gekennzeichnet, dass** sie zur temporären Konservierung oder zum temporären Schutz eines in einer Flasche gelagerten Produkts ausgebildet ist, und dass die Schutzvorrichtung so ausgebildet ist dass sie wenigstens durch die Öffnung der Flasche entfernt werden kann mittels der Anbringmitteln (12C; 12D; 12E).

6. Anordnung nach einem der Ansprüche 1-4,
**dadurch gekennzeichnet, dass** die Anbringmittel (12) aus der Oberfläche des Beutels (11), oder aus einem Abschnitt der Oberfläche, ausgebildet sind.

7. Anordnung nach Anspruch 6,
**dadurch gekennzeichnet, dass** die Anbringmittel (12A; 12B) aus einer markierten oder verstärkten oder dickeren Fläche (12A) des Beutels (11A; 11B) bestehen, oder aus auf dem Beutel vorgesehene Beutel-Greifmittel (12B).

8. Anordnung nach einem der Ansprüche 1-5,
**dadurch gekennzeichnet, dass** die Anbringmittel (12C; 12D; 12E) aus einem Anbringelement (13C; 13D; 13E) in der Form eines Faden oder eines Bandes, zum Beispiel aus Plastik oder Metall, bestehen, das vorzugsweise in der Form einer Spirale (13C), oder in irgendeine andere Form ausgebildet ist, um eine adaptierbare Länge aufzuweisen, und fest oder lösbar mit dem Beutel (11C; 11D; 11E) verbunden ist, oder in einem Stück mit dem Beutel ausgebildet ist.

9. Anordnung nach Anspruch 8,
**dadurch gekennzeichnet, dass** das Anbringelement elastisch ist, und beispielsweise aus einem Gummiband besteht.

10. Anordnung nach Anspruch 8 oder 9,
**dadurch gekennzeichnet, dass** die Anbringmittel ferner Greifmittel aufweisen, das beispielsweise aus einem Gewicht oder aus einem Griff besteht das an einem Ende des Anbringelements angeordnet ist dass sich gegenüber des Endes befindet mit dem es mit dem Beutel verbunden ist, oder das in einem Stück mit dem Beutel ausgebildet ist.

11. Anordnung nach einem der Ansprüche 8, 9 oder 10,
**dadurch gekennzeichnet, dass** die Anbringmittel (13D) ferner mit Dichtungsmittel (14C; 14D), beispielsweise einen mit den Anbringmitteln verbundenen Korken (14C) oder Deckel (14E) oder ähnliches, zum Verschließen der Öffnung ausgebildet sind.

12. Anordnung nach Anspruch 10,
**dadurch gekennzeichnet, dass** die Anbringmittel am gegenüberliegendes Ende des Beutels, mit Befestigungsvorrichtungen (17D), beispielsweise einen Haken, einer Schraube oder ähnliches, ausgebildet sind, zur Befestigung an einer Verschlussvorrichtung für den Behälter bevor der Anbringung.

13. Anordnung nach einem der vorhergehenden Ansprüche,
**dadurch gekennzeichnet, dass** das Beutel-Gas aus Argon oder aus einem anderen Lebensmittelgas besteht.

14. Verfahren zum Schutz oder zur Konservierung eines Produkts (21; 21A; 21B; 21C) mit einer gegebenen Produkt-Dichte und das in einer Behältervorrichtung (20; 20A; 20B; 20C), wie zum Beispiel eine Flasche, gelagert ist, die mit Wänden und mit einer Öffnung (22; 22A; 22B; 22C) ausgebildet ist, wenn durch die Öffnung eine Oberfläche des Produkts Substanzen die für das Produkt schädlich sind oder das Produkt beeinträchtigen können, sowie Gase wie zum Beispiel Luft, ausgesetzt werden kann, wobei, mittels Anbringmittel (12; 12A; 12B; 12C; 12D; 12E), eine Schutzvorrichtung (11; 11A; 11B; 11C; 11D; 11E) temporär in Kontakt mit der exponierten Oberfläche für konservierende Zwecke angebracht wird,
**dadurch gekennzeichnet, dass** es, wenn eine Oberfläche des Produkts exponiert ist, die folgenden Schritte umfasst:
- Bringen von der Schutzvorrichtung (11; 11A; 11B; 11C; 11D; 11E), die aus einem geschlossenem Beutel aus einem flexiblen Material besteht und eine vollständige, geschlossene, einheitliche Oberfläche aufweist, und die mit einem Beutel-Gas oder mit einer Beutel-Flüssigkeit gefüllt ist, temporär im direkten Kontakt mit der ganzen exponierten Oberfläche, wobei das Beutel-Gas oder die Beutel-Flüssigkeit eine Dichte aufweist die höher ist als die Dichte der Substanzen die für das Produkt schädlich sind oder beeinträchtigen können wie zum Beispiel Umgebungsluft oder Umgebungsgase, und geringer ist als die Dichte des gelagerten Produkts,
- Veränderung der Form des Beutels wenn er mit der exponierten Oberfläche des Produkts Kontakt bekommt und sich ausbreitet bis er Kontakt mit den Wänden des Behälters bekommt und in so einer Weise dass wenigstens im Wesentlichen die ganze exponierte Oberfläche bedeckt wird, und wobei die Form und die Größe der Kontaktoberfläche sich adaptierbar verändern in Abhängigkeit von der Form und von der Größe der exponierten Oberfläche,
- Entfernen des Beutels vollständig oder teilweise vom Produkt und vom Behälter mittels der Anbringmittel (12; 12A; 12B; 12C; 12D; 12E) um zumindest eine gewisse Menge des Produkts zu verbrauchen.

15. Verfahren nach Anspruch 14,
**dadurch gekennzeichnet, dass** es den folgenden Schritt umfasst:
- Anbringen beziehungsweise Entfernen des Beutels mittels der Anbringmittel die mit dem Beutel verbunden sind, mit dem Beutel in einem Stück ausgebildet sind, oder vom Beutel selber, oder von einem Stück davon, gebildet werden.

16. Verfahren nach Anspruch 15,
**dadurch gekennzeichnet, dass** es den folgenden Schritt umfasst:
Verwendung von den Anbringmittel, die aus einem Anbringelement bestehen und deren aktive Länge veränderbar ist, beispielsweise dadurch dass es elastisch oder spiralförmig oder ähnlich ausgebildet ist, oder dadurch dass es aus einem Element in Form von einem Faden oder einem Band beispielsweise aus Plastik, Gummi oder Metall besteht.

17. Verfahren nach Anspruch 16,
**dadurch gekennzeichnet, dass** es den folgenden Schritt umfasst:
Anbringen beziehungsweise Entfernen des Beutels mittels Griff und/oder Verschlussvorrichtungen, beispielsweise einem Korken oder einem Deckel, angeordnet in Verbindung mit den Anbringelementen.

18. Verfahren nach einem der Ansprüche 14-17,
**dadurch gekennzeichnet, dass** es den folgenden Schritt umfasst:
Anbringen des Beutels durch eine Öffnung einer Flasche um ein Produkt bestehend aus einem Getränk, beispielsweise Wein, zu konservieren, und dass die Anbringmittel eine solche Länge aufweisen, oder erreichen können, dass, unabhängig davon auf welcher Höhe in der Flasche die exponierte Oberfläche des Produkts sich befindet, der Beutel im angebrachten Zustand wenigstens im Wesentlichen die ganze exponierte Oberfläche bedecken wird.

## Revendications

1. Dispositif (10; 10A; 10B; 10C; 10D; 10E) pour protéger ou préserver un produit (21; 21A; 21B; 21C) contenu dans un récipient (20; 20A; 20B; 20C), tel qu'une bouteille, comportant des parois et une ouverture (22; 22A; 22B; 22C) et comprenant un dispositif de protection (11; 11A; 11B; 11C; 11D; 11E) pour protection contre l'influence des substances, tels que les gaz, nuisibles pour le produit lorsqu'une surface du produit soit exposé à une telle substance ou à telles substances à travers ladite ouverture, le dispositif de protection étant désigné pour être réutilisable, le dispositif comprenant en outre des moyens d'application (12; 12A; 12B; 12C; 12D; 12E) permettant la mise en contact du dispositif de protection (11; 11A; 11B; 11C; 11D; 11E) avec la surface exposée aux fins de préservation,
**caractérisé en ce que**
le dispositif de protection (11; 11A; 11B; 11C; 11D; 11E) est constitué d'un sac réalisé en un matériau flexible rempli d'un gaz ou d'une liquide (16; 16A; 16B; 16C; 16D; 16E), ledit gaz du sac ou ladite liquide du sac (16; 16A; 16B; 16C; 16D; 16E) ayant une densité plus élevée que la densité de la substance nuisible, par exemple la densité de l'air, et plus faible que la densité du produit stocké,
le sac étant de forme fermée en comprenant une surface entière, fermée et uniforme,
et **en ce que** le sac, en venant en contact avec la surface exposée du produit (21; 21A; 21B; 21C), est destiné à changer de forme et s'étendre jusqu'à venir en contact avec les parois du récipient, la surface de contact du sac prenant une forme et une grandeur telles que la surface exposée soit directement couverte, au moins essentiellement entièrement,
la forme et la grandeur de la surface de contact du sac étant variables et ayant pour but de s'adapter à la forme et la grandeur de la surface exposée, et **en ce que** les moyens d'application (12; 12A; 12B; 12C; 12D; 12E) étant de plus pourvus pour permettre l'enlèvement du sac entièrement ou partiellement du produit et du récipient autorisant l'usage d'au moins une certaine quantité du produit.

2. Dispositif selon la revendication 1,
**caractérisé en ce que**
la densité du gaz ou du liquide du sac (16; 16A; 16B; 16C; 16D; 16E) est plus élevée que la densité de l'air.

3. Dispositif selon l'une quelconque des revendications 1 à 2,
**caractérisé en ce qu'il**
est conçu pour protéger et prolonger la durabilité d'un produit alimentaire ou d'une boisson, la matière flexible dans laquelle est réalisé le sac et le gaz ou le liquide du sac étant constitués de substances inoffensives pour le produit.

4. Dispositif selon la revendication 3,
**caractérisé en ce qu'il**
est conçu pour protéger un produit liquide, par exemple une boisson.

5. Dispositif selon la revendication 4,
**caractérisé en ce qu'il**
est conçu pour protéger ou préserver un produit contenu temporairement dans une bouteille, le dispositif de protection étant conçu pour permettre l'enlèvement du sac au moins à travers l'ouverture au moyen des moyens d'application (12C; 12D; 12E).

6. Dispositif selon l'une quelconque des revendications 1 à 4,
**caractérisé en ce que**
les moyens d'application (12) sont formés par la surface du sac (11) ou par une partie de la surface du sac.

7. Dispositif selon la revendication 6,
**caractérisé en ce que**
les moyens d'application (12A; 12B) sont formés par une zone marquée, renforcée ou épaissie (12A) du sac (11A; 11B), ou par des éléments de préhension (12B) desquels le sac est équipé.

8. Dispositif selon l'une quelconque des revendications 1 à 5,
**caractérisé en ce que**
les moyens d'application (12C; 12D; 12E) comprennent un élément d'application (13C; 13D; 13E) ayant la forme d'un fil ou d'un ruban, par exemple réalisé en plastique ou en métal, de préférence conçu comme un fil en spirale (13C), ou ayant une longueur variable par d'autres moyens, et qu'il est relié de façon fixe ou de façon amovible au sac (11C; 11D; 11E) ou solidaire du sac.

9. Dispositif selon la revendication 8,
**caractérisé en ce que**
l'élément d'application est élastique, par exemple constitué d'un ruban de caoutchouc.

10. Dispositif selon l'une quelconque des revendications 8 à 9,
**caractérisé en ce que**
les moyens d'application sont de plus munis d'éléments de préhension, par exemple comportant une masse ou une poignée, étant disposées à l'extrémité du moyen d'application qui est opposée à l'extrémité du moyen d'application qui est reliée au sac ou solidaire du sac.

11. Dispositif selon l'une quelconque des revendications 8 à 9 ou 10,
**caractérisé en ce que**
les moyens d'application (13D) de plus comprennent ou sont associées aux moyens d'obturation (14C; 14D), par exemple un bouchon (14C), une couvercle (14E) ou un élément équivalent, associés aux moyens d'application propre à obturer ladite ouverture.

12. Dispositif selon la revendication 10,
**caractérisé en ce que**
les moyens d'application, à l'extrémité opposée à l'extrémité où est situé le sac, sont munis de moyens de fixation (17D), par exemple comprenant un crochet, un vis ou équivalent, propres à être fixés à un dispositif de fermeture pour le récipient avant que le sac soit appliqué.

13. Dispositif selon l'une quelconque des revendications précédentes,
**caractérisé en ce que**
le gaz du sac est un gaz d'argon ou un autre gaz alimentaire.

14. Procédé pour protéger ou préserver un produit (21; 21A; 21B; 21C), le produit ayant une certaine densité, dite densité de produit, et ledit produit étant contenu dans un récipient (20; 20A; 20B; 20C) tel qu'une bouteille, pourvu de parois et d'une ouverture (22; 22A; 22B; 22C), lorsqu'une surface dudit produit à travers ladite ouverture soit exposée à des substances, par exemple des gaz ou air, nuisibles à ou affectant ledit produit, par, à moyens des moyens d'application (12; 12A; 12B; 12C; 12D; 12E), amener un dispositif de protection (11; 11A; 11B; 11C; 11D; 11E) en contact temporaire avec la surface exposée aux fins de préservation,
**caractérisé en ce que,**
lorsque la surface d'un produit soit exposée, il comprend les étapes de:
- amenant le dispositif de protection (11; 11A; 11B; 11C; 11D; 11E), qui est constitué d'un sac fermé réalisé en un matériau élastique, et ayant toute une surface fermée et uniforme, et qui est rempli d'un gaz ou d'une liquide, en contact direct avec toute la surface exposée aux fins de préserver ou stocker le produit temporairement, ledit gaz du sac ou ladite liquide du sac ayant une densité plus élevée que la densité desdites substances nuisibles ou affectant le produit, par exemple l'air environnant ou des gaz, et plus faible que la densité du produit stocké,
- la forme du sac changeant quand le sac vient en contact avec la surface exposée du produit en s'étendant jusqu'à venir en contact avec les parois du récipient et couvrir au moins essentiellement entièrement la surface exposée, la forme et la grandeur de la surface de contact s'adaptant en dépendance à la grandeur et de la forme de la surface exposée,
- enlevant le sac entièrement ou partiellement du produit et du récipient au moyens des moyens d'application (12; 12A; 12B; 12C; 12D; 12E) pour autoriser l'usage d'au moins une certaine quantité du produit.

15. Procédé selon la revendication 14,
**caractérisé en ce qu'il**
comprend l'étape de:
- d'appliquer, respectivement d'enlever, le sac au moyen des moyens d'application qui sont reliées au sac ou solidaires du sac, ou qui sont formées par le sac propre, ou d'une portion du sac.

16. Procédé selon la revendication 15,
**caractérisé en ce qu'il**
comprend l'étape d'utiliser les moyens d'application comprenant un élément d'application dont la longueur active est variable, par exemple en étant élastique ou hélicoïdal ou équivalent, et qui est constitué d'un élément ayant la forme d'un fil ou d'un ruban, par exemple réalisé en plastique, en caoutchouc ou en métal.

17. Procédé selon la revendication 16,
**caractérisé en ce qu'il**
comprend l'étape d'appliquer, respectivement d'enlever, le sac au moyen d'éléments de préhension et/ou de moyens d'obturation, par exemple un bouchon ou une couvercle, associés aux éléments d'application.

18. Procédé selon l'une quelconque des revendications 14 à 17,
**caractérisé en ce qu'il**
comprend l'étape d'appliquer le sac à travers d'une ouverture d'une bouteille afin de préserver le produit comprenant une boisson, par exemple du vin, les moyens d'application ayant ou pouvant atteindre une longueur telle que, indépendamment du niveau sur lequel se trouve la surface exposée du produit dans la bouteille, une fois le sac appliqué, il viendra en contact avec au moins essentiellement toute la surface exposée.
